# EUROPEAN PATENT SPECIFICATION

(11) **EP 3 527 847 B1**
(45) Date of publication and mention of the grant of the patent: **02.12.2020**
(21) Application number: 17872273.2
(22) Date of filing: 20.01.2017
(51) Int. Cl.: F16H 3/089, B60K 6/48, B60K 1/00

(54) **VEHICLE DRIVING ASSEMBLY WITH TRANSVERSELY PLACED SINGLE POWER SOURCE**
FAHRZEUGSANTRIEBSANORDNUNG MIT EINER EINZIGEN, QUER ANGEORDNETEN ANTRIEBSQUELLE
ENSEMBLE D'ENTRAÎNEMENT DE VÉHICULE AVEC UNE SOURCE D'ALIMENTATION UNIQUE PLACÉE TRANSVERSALEMENT

(30) Priority: 18.11.2016 CN 201611028710
(43) Date of publication of application: 21.08.2019
(73) Proprietor: Jing-Jin Electric Technologies Co., Ltd, Beijing 100016 (CN)
(72) Inventor: YU, Ping, Beijing 100016 (CN); WANG, Xueliang, Beijing 100016 (CN); LI, Jianwen, Beijing 100016 (CN)
(74) Representative: Maiwald Patent- und Rechtsanwaltsgesellschaft mbH
(86) International application number: PCT/CN2017/071842
(87) International publication number: WO 2018/090483

(56) References cited:
- CN-A- 102 392 883
- CN-A- 102 392 885
- CN-A- 103 442 924
- CN-A- 104 565 226
- CN-A- 104 595 428
- CN-A- 105 822 733
- CN-A- 105 972 163
- CN-U- 202 186 286
- JP-A- 2001 159 452
- JP-A- 2009 220 657

## Description

### TECHNICAL FIELD

The present disclosure relates to a vehicle driving assembly with transversely placed single power source, connected to the vehicle front axle or rear axle, for driving the vehicle.

### BACKGROUND

In current purely electrical driven or mixed power new energy automobiles, the dynamic characteristics of the electric motors being used cannot meet the requirements of the entire vehicle, especially the requirements of speed ratio and moment. As new energy automobiles need to face increasingly complicated operating conditions and road conditions, the users' expectations on comfortable and endurance mileage of new energy automobiles keep increasing, and new energy automobiles of simple electric motor direct driving mode, electric-motor-connected-to-speed-reducer mode or fuel-electricity hybrid mode cannot satisfy demands of the developing new energy automobile industry.

In current vehicle power assemblies, power source, clutch, gearbox or speed reducer, and driving shaft are generally longitudinally arranged, so these vehicle power assemblies are relatively long and large, and not applicable to some small vehicles requiring a compact structure.

Furthermore, in current purely electrical driven or mixed power new energy automobiles, speed reducers cannot use conventional friction clutches due to the large shock of the rotor shaft of electric motor (the rotor shaft and the input shaft are not integrated). The clutch being used can only be hard connected and does not have cushioning effect, so it cannot satisfy the requirements of new energy automobiles.

In the existing automobiles of electric motor direct driving mode, the power system does not have clutch function, so the conventional inertia friction synchronizers cannot be used, the transmission cannot shift gears, and only one speed ratio can be chosen. The startup and stop of the entire vehicle can only rely on the startup and stop of the electric motor, which affects the performance of the electric motor.

CN 105972163 A discloses, in the opinion of the Examining Division of the European Patent Office, a vehicle driving assembly with transversely placed single power source, connected to vehicle axle half shafts, wherein the vehicle driving assembly comprises a power source and an automatic transmission, the automatic transmission is provided with an input shaft, the power source is connected to the input shaft, and a differential is provided at a joint of the automatic transmission and the vehicle axle half shafts; in the automatic transmission, a first intermediate shaft is provided parallel to the input shaft, a second intermediate shaft is provided in the direction coaxial with the input shaft, a third intermediate shaft is provided in the direction coaxial with the first intermediate shaft, a first clutch is provided between the first intermediate shaft and the third intermediate shaft, and a second clutch is provided between the input shaft and the second intermediate shaft; and the input shaft is provided with a first gear, the first intermediate shaft is provided with a second gear, and the first gear and the second gear are engaged to transmit power; the second intermediate shaft is provided with a third gear, the third intermediate shaft is provided with a fourth gear, and the third gear and the fourth gear are engaged to transmit power; and the third intermediate shaft is further provided with a fifth gear, the differential is provided with a sixth gear, and the fifth gear and the sixth gear are engaged to transmit power.

### SUMMARY

In view of the above problems in the prior art, the present invention provides a vehicle driving assembly with transversely placed single power source, to solve the problem of the existing power assemblies that the transmission is performed in a single speed ratio, and they cannot adapt to complicated road conditions and operating conditions.

Additionally, the present invention is to solve the problems of the existing power assemblies that the longitudinal dimension is large, so they cannot be used in vehicles with a compact structure, and that the number of gears in the transmission is large and thus the transmission structure is complicated.

These objects are achieved by a vehicle driving assembly according to claim 1. The dependent claims concern particular embodiments of the invention as defined in claim 1.

The present disclosure employing the above structure configurations has the following advantages:
The vehicle power assembly of the present disclosure is connected to the rear axle half shaft or the front axle half shaft of the vehicle. The vehicle driving assembly can realize transmission of two speed ratios, and the transmission modes are flexible and can satisfy the demands of the entire vehicle for running under different road conditions. When the vehicle climbs a slope with a heavy load, the larger speed ratio transmission can be chosen to increase the driving force of the entire vehicle and overcome the defect of insufficient driving force of the entire vehicle. When the entire vehicle is cruising, the smaller speed ratio transmission can be chosen to satisfy the requirement of the entire vehicle for high speed running, save energy, and increase the endurance mileage of vehicle.

The design of the torsional shock absorber in combination with the face tooth clutches can minimize kinetic energy loss, and overcomes the defect of traditional friction clutches that their lives are too short because they cannot withstand the dynamic shock of the electric motor.

The vehicle driving assembly with transversely placed single power source provided by the present invention shortens the longitudinal dimension of the driving assembly, and is suitable for vehicles of a compact structure; moreover, since the number of gears being used is small, the transmission structure is simplified.

In order to more apparently understand the present invention and to more readily understand above and other objectives, features and advantages of the present invention, a particular embodiment of the present invention is provided hereinafter.

### BRIEF DESCRIPTION OF DRAWINGS

Various other advantages and merits will become apparent to those having ordinary skill in the art by reading through the detailed description of the following embodiments. Accompanying drawings are merely included for the purpose of illustrating embodiments and should not be considered as limiting the invention as defined in claim 1. Further, throughout the drawings, like reference signs are used to denote like elements. In the drawings:
Fig. 1 is a schematic diagram of the structure of an embodiment not falling within the wording of claim 1 and
Fig. 2 is a schematic diagram of the structure of an embodiment falling within the wording of claim 1.

In the drawings:
10, automatic transmission; 11, first gear; 12, second gear; 13, third gear; 14, fourth gear; 15, fifth gear; 16, sixth gear;
20, input shaft;
31, first intermediate shaft; 32, second intermediate shaft; 33, third intermediate shaft;
41, first clutch; 42, second clutch;
50, differential;
61, engine; 62, ISG electric motor; 63, torsional shock absorber; and
70, electric motor.

### DETAILED DESCRIPTION

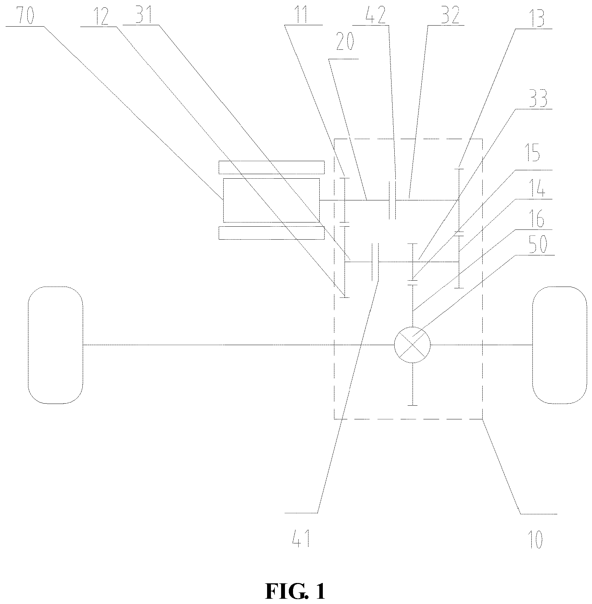

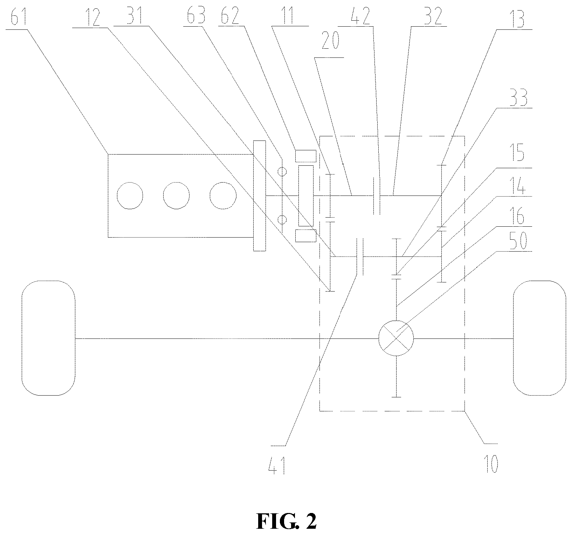

Embodiments will be described in more detail below with reference to Fig. 1 and 2. Although Fig.2 discloses an embodiment falling within the wording of claim 1 it should be understood that the invention as defined in claim 1 may be implemented in various forms and is not limited by the embodiment shown in Fig.2. Instead, these embodiments are provided to facilitate those skilled in the art to more thoroughly understand the invention as defined in claim 1.

Embodiment shown in Fig. 1 As shown in Fig. 1, there is provided a vehicle driving assembly with transversely placed single power source, connected to vehicle axle half shafts. The vehicle driving assembly comprises a power source and an automatic transmission 10. The automatic transmission 10 is provided with an input shaft 20. The power source is connected to the input shaft 20. A differential 50 is provided at the joint of the automatic transmission 10 and the vehicle axle half shafts.

The power source is an electric motor 70, and the rotor shaft of the electric motor 70 and the input shaft 20 are integrated.

In the automatic transmission 10, a first intermediate shaft 31 is provided parallel to the input shaft, a second intermediate shaft 32 is provided in the direction coaxial with the input shaft 20, a third intermediate shaft 33 is provided in the direction coaxial with the first intermediate shaft 31, a first clutch 41 is provided between the first intermediate shaft 31 and the third intermediate shaft 33, and a second clutch 42 is provided between the input shaft 20 and the second intermediate shaft 32.

The input shaft 20 is provided with a first gear 11, the first intermediate shaft 31 is provided with a second gear 12, and the first gear 11 and the second gear 12 are engaged to transmit power; the second intermediate shaft 32 is provided with a third gear 13, the third intermediate shaft 33 is provided with a fourth gear 14, and the third gear 13 and the fourth gear 14 are engaged to transmit power; the third intermediate shaft 33 is further provided with a fifth gear 15, the differential 50 is provided with a sixth gear 16, and the fifth gear 15 and the sixth gear 16 are engaged to transmit power.

It can be known from the above that, the transmission of the vehicle driving assembly of the first embodiment of the present disclosure is different from traditional transmissions in the layout mode of input shaft, intermediate shaft and output shaft. Thereby the longitudinal dimension of the driving assembly is shortened, which makes it suitable for vehicles with a compact structure; moreover, since the number of gears being used is small, the transmission process is simplified.

The power transmission mode of the driving assembly is as follows:
When the first clutch 41 is in engagement, the power source transmits power to the vehicle axle half shaft via successively the input shaft 20, the first gear 11, the second gear 12, the first intermediate shaft 31, the third intermediate shaft 33, the fifth gear 15, the sixth gear 16 and the differential 50. If the engaged transmission ratio of the first gear 11 to the second gear 12 is set to i1, and the engaged transmission ratio of the fifth gear 15 to the sixth gear 16 is set to i3, when the first clutch 41 is in engagement, the engaged transmission ratio in the automatic transmission 10 is i1×i3; this is the first operating condition.

When the second clutch 42 is in engagement, the power source transmits power to the vehicle axle half shaft via successively the input shaft 20, the second intermediate shaft 32, the third gear 13, the fourth gear 14, the third intermediate shaft 33, the fifth gear 15, the sixth gear 16 and the differential 50. If the engaged transmission ratio of the third gear 13 to the fourth gear 14 is set to i2, and the engaged transmission ratio of the fifth gear 15 to the sixth gear 16 is set to i3, when the second clutch 42 is in engagement, the engaged transmission ratio in the automatic transmission 10 is i2×i3; this is the second operating condition.

When the first clutch 41 and the second clutch 42 are simultaneously released, the vehicle is shifted into neutral.

The magnitudes of transmission ratios i1, i2 and i3 can be changed by changing size or tooth number of the gears, and thus the transmission ratio of the automatic transmission 10 is changed.

It can be known from the above that, the vehicle driving assembly can realize transmission of two speed ratios, and the automatic transmission can realize electrically controlled automatic gear shift between two positions of gears according to a controlling strategy program. The transmission modes are flexible, and can satisfy the demands of the vehicle for running under different road conditions. When the vehicle climbs a slope with a heavy load, the larger speed ratio transmission can be chosen to increase the driving force of the entire vehicle and overcome the defect of insufficient driving force of the entire vehicle. When the entire vehicle is cruising, the smaller speed ratio transmission can be chosen to satisfy the requirement of the entire vehicle for high speed running, energy saving, and increasing the endurance mileage of vehicle.

The first clutch 41 and the second clutch 42 are face tooth clutches comprising a movable fluted disc and a fixed fluted disc, which are engaged to transmit power. The movable fluted disc is provided with end face transmission gears or tooth spaces, and the fixed fluted disc is correspondingly provided with end face tooth spaces or transmission gears. The face tooth clutches, compared with friction clutches, can reduce kinetic energy loss to the largest extent, and overcome the defect of traditional friction clutches that life is too short because they cannot withstand the dynamic shock of the electric motor.

The drive manner of the face tooth clutches may be electromagnetic driving type (driven by electromagnet attraction), hydraulic driving type (driven by a hydraulic mechanism), pneumatic driving type (driven by a pneumatic mechanism), or electrical driving type (driven by an electric motor). The movable fluted disc is driven to axially move and engage with the fixed fluted disc.

When the first clutch 41 and the second clutch 42 of the vehicle driving assembly are electromagnetic jaw clutches, the electromagnetic jaw clutches can enable the power and the entire vehicle to be released and engaged instantly at any moment during power inputting, and thus realizes smooth power switch and increases travelling stability of the vehicle.

In the first embodiment of the present disclosure, the vehicle axle half shafts including front axle half shafts or rear axle half shafts. When the vehicle driving assembly is connected to the front axle half shaft, the vehicle is in front driving mode; when the vehicle driving assembly is connected to the rear axle half shaft, the vehicle is in rear driving mode.

### Embodiment shown in Fig.2

As shown in Fig. 2, the power source is the combination of an engine 61 and an ISG electric motor 62. Thereby the idle speed loss and the pollution of the engine can be reduced; moreover, the ISG electric motor serves as an electric generator and can regenerate power and recycle energy, and thus saves energy.

Other contents of the embodiment shown in Fig.2 are the same as those of the embodiment shown in Fig.1, and will not be described repeatedly here.

As shown in Fig. 2, a torsional shock absorber 63 is provided between the engine 61 and the ISG electric motor 62. The torsional shock absorber 63 has damping effect and reduces torsional stiffness at the joint of the engine and the ISG electric motor, thereby reduces natural frequency of torsional vibration and eliminates torsional vibration.

## Claims

1. A vehicle driving assembly with transversely placed single power source, connected to vehicle axle half shafts, wherein
the vehicle driving assembly comprises a power source and an automatic transmission (10), the automatic transmission (10) is provided with an input shaft (20), the power source is connected to the input shaft (20), and a differential (50) is provided at a joint of the automatic transmission (10) and the vehicle axle half shafts;
in the automatic transmission (10), a first intermediate shaft (31) is provided parallel to the input shaft (20), a second intermediate shaft (32) is provided in the direction coaxial with the input shaft (20), a third intermediate shaft (33) is provided in the direction coaxial with the first intermediate shaft (31), a first clutch (41) is provided between the first intermediate shaft (31) and the third intermediate shaft (33), and a second clutch (42) is provided between the input shaft (20) and the second intermediate shaft (32);
the input shaft (20) is provided with a first gear (11), the first intermediate shaft (31) is provided with a second gear (12), and the first gear (11) and the second gear (12) are engaged to transmit power; the second intermediate shaft (32) is provided with a third gear (13), the third intermediate shaft (33) is provided with a fourth gear (14), and the third gear (13) and the fourth gear (14) are engaged to transmit power; and the third intermediate shaft (33) is further provided with a fifth gear (15) at a position between the first clutch (41) and the fourth gear (14), the differential (50) is provided with a sixth gear (16), and the fifth gear (15) and the sixth gear (16) are engaged to transmit power; and
the power source is the combination of an engine (61) and an ISG electric motor (62), and a torsional shock absorber (63) is provided between the engine (61) and the ISG electric motor (62).

2. The vehicle driving assembly according to claim 1, wherein when the first clutch (41) is in engagement, the power source transmits power to the vehicle axle half shafts via successively the input shaft (20), the first gear (11), the second gear (12), the first intermediate shaft (31), the third intermediate shaft (33), the fifth gear (15), the sixth gear (16) and the differential (50).

3. The vehicle driving assembly according to claim 2, wherein the engaged transmission ratio of the first gear (11) to the second gear (12) is i1, the engaged transmission ratio of the fifth gear (15) to the sixth gear (16) is i3, and when the first clutch (41) is in engagement, the engaged transmission ratio in the automatic transmission (10) is i1×i3.

4. The vehicle driving assembly according to claim 1, wherein when the second clutch (42) is in engagement, the power source transmits power to the vehicle axle half shafts via successively the input shaft (20), the second intermediate shaft (32), the third gear (13), the fourth gear (14), the third intermediate shaft (33), the fifth gear (15), the sixth gear (16) and the differential (50).

5. The vehicle driving assembly according to claim 4, wherein the engaged transmission ratio of the third gear (13) to the fourth gear (14) is i2, the engaged transmission ratio of the fifth gear (15) to the sixth gear (16) is i3, and when the second clutch (42) is in engagement, the engaged transmission ratio in the automatic transmission (10) is i2×i3.

6. The vehicle driving assembly according to claim 1, wherein the vehicle axle half shafts including front axle half shafts or rear axle half shafts.

7. The vehicle driving assembly according to claim 1, wherein the first clutch (41) and the second clutch (42) are face tooth clutches.

8. The vehicle driving assembly according to claim 7, wherein the face tooth clutches are of electromagnetic driving type, or hydraulic driving type, or pneumatic driving type, or electrical driving type.

## Patentansprüche

1. Fahrzeugantriebsanordnung mit quer angeordneter einzelner Kraftquelle, die mit Fahrzeugachshalbwellen verbunden ist, wobei
die Fahrzeugantriebsanordnung eine Kraftquelle und ein Automatikgetriebe (10) aufweist, wobei das Automatikgetriebe (10) mit einer Eingangswelle (20) versehen ist, die Stromquelle mit der Eingangswelle (20) verbunden ist, und ein Differential (50) an einem Gelenk des Automatikgetriebes (10) und der Fahrzeugachshalbwellen vorgesehen ist;
in dem Automatikgetriebe (10) eine erste Zwischenwelle (31) parallel zur Eingangswelle (20) vorgesehen ist, eine zweite Zwischenwelle (32) in der Richtung koaxial zur Eingangswelle (20) vorgesehen ist, eine dritte Zwischenwelle (33) in der Richtung koaxial zur ersten Zwischenwelle (31) vorgesehen ist, eine erste Kupplung (41) zwischen der ersten Zwischenwelle (31) und der dritten Zwischenwelle (33) vorgesehen ist und eine zweite Kupplung (42) zwischen der Eingangswelle (20) und der zweiten Zwischenwelle (32) vorgesehen ist;
die Eingangswelle (20) mit einem ersten Zahnrad (11) versehen ist, die erste Zwischenwelle (31) mit einem zweiten Zahnrad (12) versehen ist, und das erste Zahnrad (11) und das zweite Zahnrad (12) sich zur Kraftübertragung im Eingriff befinden; die zweite Zwischenwelle (32) mit einem dritten Zahnrad (13) versehen ist, die dritte Zwischenwelle (33) mit einem vierten Zahnrad (14) versehen ist und das dritte Zahnrad (13) und das vierte Zahnrad (14) sich zur Kraftübertragung im Eingriff befinden; und die dritte Zwischenwelle (33) ferner mit einem fünften Zahnrad (15) an einer Position zwischen der ersten Kupplung (41) und dem vierten Zahnrad (14) versehen ist, das Differential (50) mit einem sechsten Zahnrad (16) versehen ist, und das fünfte Zahnrad (15) und das sechste Zahnrad (16) sich zur Kraftübertragung im Eingriff befinden; und
die Energiequelle die Kombination eines Motors (61) und eines ISG-Elektromotors (62) ist, und ein Torsionsstoßdämpfer (63) zwischen dem Motor (61) und dem ISG-Elektromotor (62) vorgesehen ist.

2. Fahrzeugantriebsanordnung nach Anspruch 1, wobei, wenn die erste Kupplung (41) eingerückt ist, die Energiequelle nacheinander über die Eingangswelle (20), das erste Zahnrad (11), das zweite Zahnrad (12), die erste Zwischenwelle (31), die dritte Zwischenwelle (33), das fünfte Zahnrad (15), das sechste Zahnrad (16) und das Differential (50) Kraft auf die Fahrzeugachshalbwellen überträgt.

3. Fahrzeugantriebsanordnung nach Anspruch 2, wobei das Übersetzungsverhältnis des ersten Zahnrads (11) zum zweiten Zahnrad (12) i1 ist, das sich im Eingriff befindliche Übersetzungsverhältnis des fünften Zahnrads (15) zum sechsten Zahnrads (16) i3 ist, und wenn die erste Kupplung (41) eingerückt ist, das Übersetzungsverhältnis in dem Automatikgetriebe (10) i1 x i3 ist.

4. Fahrzeugantriebsanordnung nach Anspruch 1, wobei, wenn die zweite Kupplung (42) eingerückt ist, die Energiequelle nacheinander über die Eingangswelle (20), die zweite Zwischenwelle (32), das dritte Zahnrad (13), das vierte Zahnrad (14), die dritte Zwischenwelle (33), das fünfte Zahnrad (15), das sechste Zahnrad (16) und das Differential (50) Kraft auf die Fahrzeugachshalbwellen überträgt.

5. Fahrzeugantriebsanordnung nach Anspruch 4, wobei das sich im Eingriff befindliche Übersetzungsverhältnis des dritten Zahnrads (13) zum vierten Zahnrad (14) i2 ist, das sich im Eingriff befindliche Übersetzungsverhältnis des fünften Zahnrads (15) zum sechsten Zahnrad (16) i3 ist, und wenn die zweite Kupplung (42) eingerückt ist, das Übersetzungsverhältnis in dem Automatikgetriebe (10) i2 x i3 ist.

6. Fahrzeugantriebsanordnung nach Anspruch 1, wobei die Fahrzeugachshalbwellen Vorderachshalbwellen oder Hinterachshalbwellen aufweisen.

7. Fahrzeugantriebsanordnung nach Anspruch 1, wobei die erste Kupplung (41) und die zweite Kupplung (42) Stirnzahnkupplungen sind.

8. Fahrzeugantriebsanordnung nach Anspruch 7, wobei die Stirnzahnkupplungen vom elektromagnetischen Antriebstyp oder vom hydraulischen Antriebstyp oder vom pneumatischen Antriebstyp oder vom elektrischen Antriebstyp sind.

## Revendications

1. Un ensemble d'entraînement de véhicule avec une source d'énergie unique placée transversalement, reliée à des demi-arbres d'essieu du véhicule,
l'ensemble d'entraînement de véhicule comprenant une source de puissance et une transmission automatique (10), la transmission automatique (10) étant munie d'un arbre d'entrée (20), la source de puissance étant reliée à l'arbre d'entrée (20), et un différentiel (50) étant prévu à une jonction de la transmission automatique (10) et des demi-arbres d'essieu de véhicule ;
dans la transmission automatique (10), un premier arbre intermédiaire (31) est prévu parallèlement à l'arbre d'entrée (20), un deuxième arbre intermédiaire (32) est prévu dans la direction coaxiale avec l'arbre d'entrée (20), un troisième arbre intermédiaire (33) est prévu dans la direction coaxiale au premier arbre intermédiaire (31), un premier embrayage (41) est prévu entre le premier arbre intermédiaire (31) et le troisième arbre intermédiaire (33), et un deuxième embrayage (42) est prévu entre l'arbre d'entrée (20) et le deuxième arbre intermédiaire (32) ;
l'arbre d'entrée (20) est muni d'un premier engrenage (11), le premier arbre intermédiaire (31) est muni d'un deuxième engrenage (12), et le premier engrenage (11) et le deuxième engrenage (12) sont en prise pour transmettre la puissance ; le deuxième arbre intermédiaire (32) est muni d'un troisième engrenage (13), le troisième arbre intermédiaire (33) est muni d'un quatrième engrenage (14), et le troisième (13) et le quatrième (14) sont en prise pour transmettre la puissance ; et le troisième arbre intermédiaire (33) est en outre muni d'un cinquième engrenage (15) en une position située entre le premier embrayage (41) et le quatrième engrenage (14),
le différentiel (50) est muni d'un sixième engrenage (16), et le cinquième engrenage (15) et le sixième engrenage (16) sont en prise de façon à transmettre la puissance ; et
la source d'énergie est la combinaison d'un moteur (61) et d'un moteur électrique ISG (62), et un amortisseur de torsion (63) est prévu entre le moteur (61) et le moteur électrique ISG (62).

2. L'ensemble d'entraînement de véhicule selon la revendication 1, dans lequel, lorsque le premier embrayage (41) est en prise, la source de puissance transmet la puissance aux demi-arbres d'essieu du véhicule via successivement l'arbre d'entrée (20), le premier engrenage (11), le deuxième engrenage (12), le premier arbre intermédiaire (31), le troisième arbre intermédiaire (33), le cinquième engrenage (15), le sixième engrenage (16) et le différentiel (50).

3. L'ensemble d'entraînement de véhicule selon la revendication 2, dans lequel le rapport de transmission engagé du premier engrenage (11) au deuxième engrenage (12) est i1, le rapport de transmission engagé du cinquième engrenage (15) au sixième engrenage (16) est i3, et lorsque le premier embrayage (41) est en prise, le rapport de transmission engagé dans la transmission automatique (10) est i1 × i3.

4. L'ensemble d'entraînement de véhicule selon la revendication 1, dans lequel, lorsque le deuxième embrayage (42) est en prise, la source de puissance transmet la puissance aux demi-arbres d'essieu du véhicule par l'intermédiaire successivement de l'arbre d'entrée (20), du deuxième arbre intermédiaire (32), du troisième engrenage (13), du quatrième engrenage (14), du troisième arbre intermédiaire (33), du cinquième engrenage (15), du sixième engrenage (16) et du différentiel (50).

5. L'ensemble d'entraînement de véhicule selon la revendication 4, dans lequel le rapport de transmission engagé du troisième engrenage (13) au quatrième engrenage (14) est i2, le rapport de transmission engagé du cinquième engrenage (15) au sixième engrenage (16) est i3, et lorsque le deuxième embrayage (42) est en prise, le rapport de transmission engagé dans la transmission automatique (10) est i2 × i3.

6. L'ensemble d'entraînement du véhicule selon la revendication 1, dans lequel les demi-arbres d'essieu du véhicule comprennent des demi-arbres d'essieu avant ou des demi-arbres d'essieu arrière.

7. L'ensemble d'entraînement de véhicule selon la revendication 1, dans lequel le premier embrayage (41) et le deuxième embrayage (42) sont des embrayages à dentures faciales.

8. L'ensemble d'entraînement de véhicule selon la revendication 7, dans lequel les embrayages à dentures faciales sont de type à entraînement électromagnétique, ou de type à entraînement hydraulique, ou de type à entraînement pneumatique, ou de type à entraînement électrique.
